Europäisches Patentamt

(19) European Patent Office

Office européen des brevets

(11) Publication number: **0 035 664**

**A1**

(12) # EUROPEAN PATENT APPLICATION

(21) Application number: 81101048.7

(22) Date of filing: 14.02.81

(51) Int. Cl.³: **F 04 B 39/06**
**F 04 F 1/02, A 01 C 23/00**

(30) Priority: 06.03.80 IT 8361280
11.11.80 IT 2587080

(43) Date of publication of application:
16.09.81 Bulletin 81/37

(84) Designated Contracting States:
AT BE CH DE FR GB LI NL SE

(71) Applicant: B.S.F. di Benzi Mario e Renzo & Co. s.a.s.
11, Via Milano
I-21047 Saronno(IT)

(72) Inventor: Benzi, Mario
11, Via Milano
I-21047 Saronne(IT)

(72) Inventor: Benzi, Renzo
11, Via Milano
I-21047 Saronne(IT)

(74) Representative: Ferraiolo, Ruggero
Viale Tunisia, 29
I-20124 Milano(IT)

(54) Air pump associated with a tank and method of cooling the pump.

(57) An air pump (1) is held in a shell (3) containing an adequate quantity of cooling liquid (4); in turn, the shell (3) is incorporated in a tank (53) so that the air pump (1) is cooled by the cooling liquid (4) in the shell (3) and said cooling liquid (4) is cooled, in turn, by the liquid or sewage (9) in the tank (53).
The system comprises a shell (3) incorporated in a tank (53), an air pump (1) installed in the shell (3) and radially fastened by feet (18) and by adjustement rods (19) and axially fastened by seal means (60-71) of a power take-off (10) and of air passage pipes (11,12) comprised in a cover (32) for closing the shell (3). Alternatively, the system comprises a cover (84) that closes a shell (81) installed in a tank (82), said cover (84) also working as closing element for an end of an air pump (95) comprised in the shell (81), as restraining element for the rotor (100) of the air pump (95) and, on the whole, as an element supporting the air pump (95) and the accessories thereof in the shell (81).

FIG. 5

Croydon Printing Company Ltd.

TITLE MODIFIED
see front page

- 1 -

<u>A method for cooling an air pump associated with a tank and
a system for associating said air pump with said tank.</u>

The invention relates to a method for cooling an air pump
associated with a tank and a system for associating said air
pump with said tank.

The air pumps referred to in this specification are used to
cause depressions or overpressures in order to displace
liquids and the invented method and system are particularly
suitable to be used with mobile tanks, more particularly with
the mobile tanks for farm use, employed for moving sewage.

According to the prior-art, known to the applicant through
the products put on the market, the air pumps are installed
outside the tanks. Sometimes said pumps are not provided with
cooling systems; other times they are provided with a cooling
system similar with that used for cooling internal combustion
engines.

Another peculiarity of the prior-art is that, in the tanks
towed by a farm tractor or other vehicle (in the following
"tractor" only will be specified), the air pump must be located so as to easily get the motion from a rear power take-off of the tractor and, consequently, the pump must be placed between the rear part of the tractor and the front of the tank.

A first disadvantage of the prior-art resides in that the non cooled air pumps often suffer damages since the users often make them work over the time period recommended by the manufacturer; the cooled air pumps are very expensive. A second disadvantage of the prior-art resides in that an air pump, as being rather bulky, particularly if equipped with a cooling system, and being located within the rear part of a tractor and the front of a towed tank, causes reduction of the steering freedom or requires the use of a particularly long drawbar which, in turn, causes other disadvantages well known to the operators.

According to the invented method and system, an air pump, together with its accessories, is held in a shell into which a cooling liquid lies or circulates and the shell, in turn, is quite totally incorporated inside the tank, close to the bottom part of the tank, so that the liquid or sewage in the tank cools the shell and, consequently, the air pump held therein. Said shell works also as supporting member for the air pump and may be provided with inlets and outlets for allowing a cooling liquid to be circulated inside the shell and in a outer heat exchanger by a proper pump. The air pump shall be provided with a power take-off extended outside the shell so as to be conveniently connected with a power take-off on the rear part of a tractor. In addition or in

- 3 -

alternative to the outer power take-off there is in the shell an hydraulic engine which drives the air pump and is operated by a pressure fluid supplied from a suitable outer source, through proper hydraulic ducts. Further, the delivery and intake air ducts of the air pump pass through a shell wall kept outside the tank. In an alternative embodiment of the invention, a side cover closing a pump end and restraining the pump rotor also works as cover of said shell. Such side cover then also comprises the seats for housing a bearing that bears an end of the shaft of the air pump rotor and a bearing that bears an end of a reduction gear wheel comprising a pinion gear for the power take-off from a tractor engine. This cover comprises: a peripheral groove engaging the outer edge of the shell previously covered with a convenient seal; means for clamping the cover to the shell; a cover element which covers the speed reduction coupling gears between the power take-off and the shaft of the air pump rotor, said cover element also housing a bearing that bears the reduction gear wheel; switch means for the air operated by the air pump.

Chief among the advantages of the invention there is the fact that an air pump associated with a tank is economically cooled and has long life and that the room taken by the air pump is considerably reduced so that the tank may be connected with the tractor by a drawbar of standard length.

Two embodiments of the invention are described in detail herebelow with reference to the accompanying diagrammatic drawings in which:

FIG. 1 is a side view, partly in section, of a first shell,

Dott. Ing. Ruggero Ferraiolo

incorporated in a first tank, holding a first air pump and accessories thereof,

FIG. 2 is a longitudinal cross section showing a way to connect each other inner and outer parts of the delivery and intake ducts of the air operated by the first air pump,

FIG. 3 is a longitudinal cross section showing a way to make the extension of the power take-off of the first air pump outside the shell,

FIG. 4 is a front view of FIG. 1,

FIG. 5 is a side view, partly in section, of the first tank, mounted on a frame, into which a shell according to the foregoing figures is incorporated,

FIG. 6 is a side view, partly in section, showing a second shell, incorporated into a second tank, holding a second air pump,

FIG. 7 is a cross section according to X-X of FIG. 6.

An air pump 1, coupled with a hydraulic engine 2, is provided with an outer power take-off 10, with pipes 11, 12 for the air delivery and intake, with outer air switch means 13 and its handle 14, with a lubricating oil reservoir 15 for lubricating the air pump connected with pipes 11', 12' by ducts 16, 17. By a handwheel 78 the quantity of lubricating oil intaken in the pipe 11' is adjusted. Alternatively, although not shown in the drawings, the reservoir 15 may be located inside the shell 3. The air pump 1, together with the engine 2 and other accessories, is held in the shell 3 having its side wall 30 cylindrical, a end wall 31 convex and a cover 32 fastened by bolts 33 to a peripheral flange of the shell. The volume of shell 3 is such that, in addition to hold said mechanical parts, it contains a solution of water and ethylene glycol 4 having volume adeguate to cool the air pump 1 and the hydraulic engine 2 even if the solution does not circulate in an outer cooling equipment, provided the work of the air pump and hydraulic engine does not extend over a time period specified by the manufacturer. The shell 3 is provided with an upper inlet 34 and a lower outlet 35, each closed by a cap for filling in and ejecting from the shell 3 the solution 4.

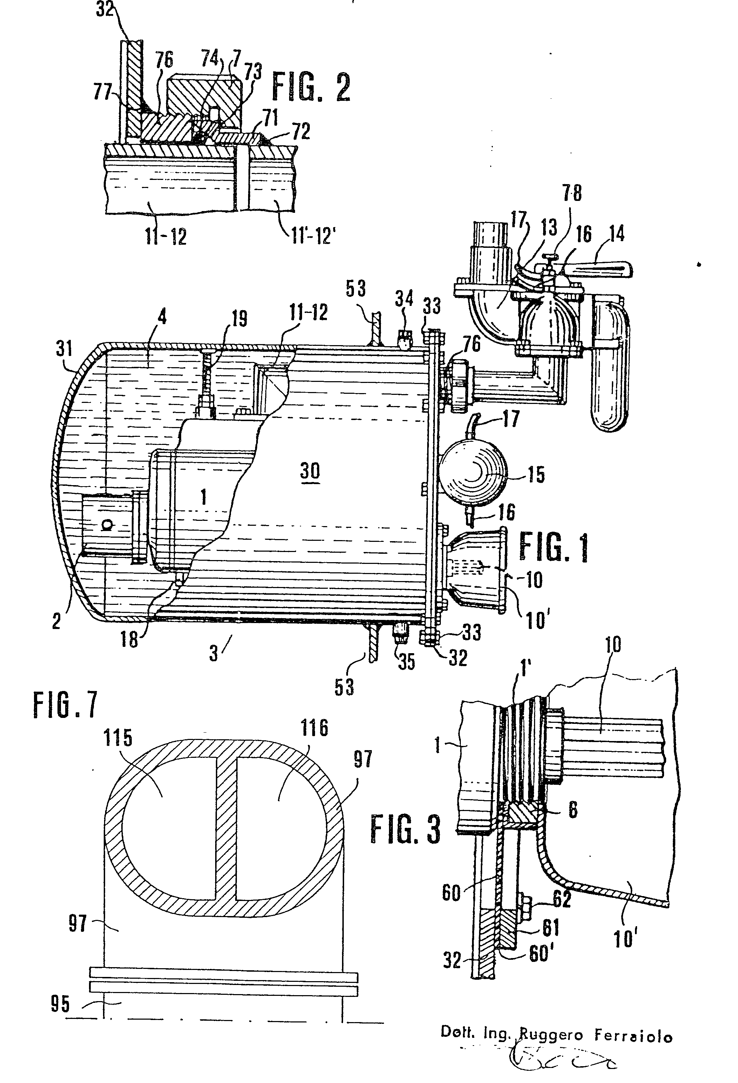

The air pump 1 is prevented from radial movements in the shell 3 by lower feet 18 and upper rods 19, the latter being threaded so as to adjust the extension thereof by screwing or unscrewing them in a threaded hole on the outer upper part of the air pump. The shell 3 is water-tight and the passage and extension towards outside of the pipes 11, 12 and of the power take-off 10 are illustrated in the FIGG. 2 and 3. The power take-off 10 passes through a sleeve provided with outer threads 1' being part of the case of the air pump 1. A sheet 60 of neoprene is pressed by a ring nut 6 on the shoulder of the threaded sleeve. The sheet 60 is circular shaped and its periphery 60' is pressed on the cover 32 by a ring 61 by screws 62. The power take-off 10 is protected by a bumper 10'. This embodiment allows for a fair clearance between the air pump 1 and the shell 3 which is useful to avoid that the vibration of the pump are trasmitted to the

*Dott. Ing. Ruggero Ferraiolo*

shell and vice versa. In order to make non rigid the connection between the air delivery and intake pipes and the shell 3 and the cover 32 the above pipes are divided in an inner part 11, 12 and in an outer part 11', 12'. A ring 71, provided with a pressing sloping surface 73, is welded on said outer parts 11', 12' by the weld bead 72, said surface 73 pressing a "O-ring" seal 74 that, in turn, presses on the pipes 11, 12 and on the front surface of a threaded ring 76 welded on the cover 32 by the weld bead 77. A ring nut 7 pushes the ring 71 towards the ring 76. The system for connecting and for extending outside the power take-off 10 and the pipes 11, 12 prevents the air pump from moving axially.

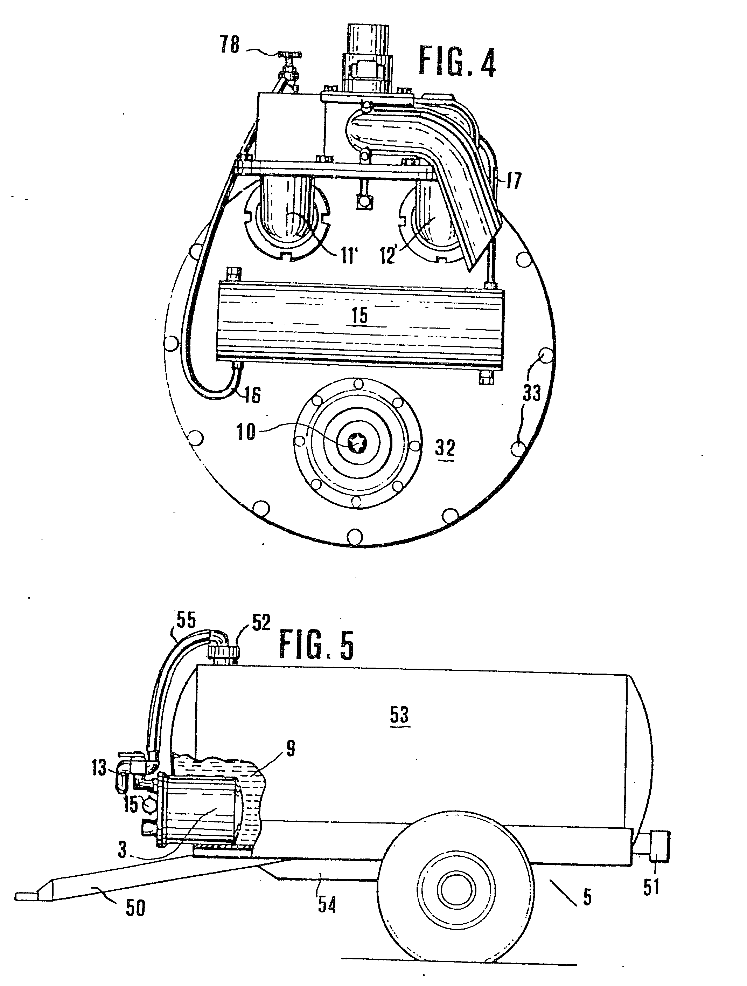

As it is shown in FIG. 5, the shell 3 holding the air pump 1 is quite totally incorporated in the tank 53, welded in the front lower part thereof. The shell 3 is dipped in the liquid 9 in the tank. The figure also shows a trailer 5 provided with a drawbar 50 and a frame 54. The tank 53 is provided with an inlet 52 and an intake tube 55 connecting the inlet 52 with the upper pipe which branches off from the switch 13.

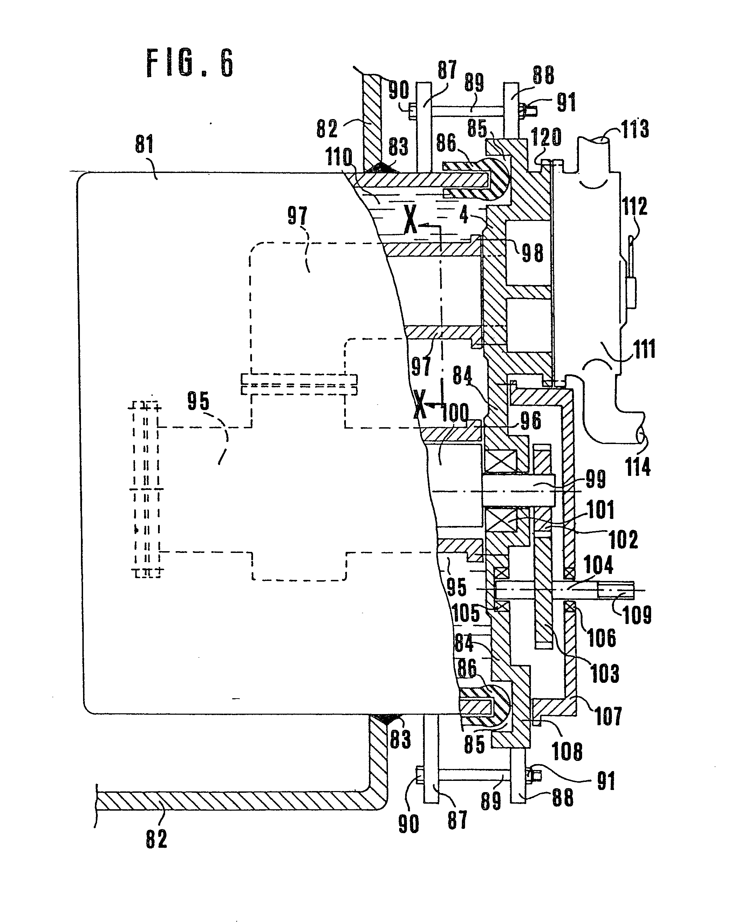

With reference to FIGG. 6 and 7, a second shell 81 is shown incorporated in a second tank 82, welded all along its periphery, close to the tank bottom, by the weld bead 83. The shell 81 is closed by the cover 84 peripherally provided with a groove 85 into which a U neoprene seal 86 is engaged that, in turn, engages with its two expansions the peripheral edge of the shell 81. A plurality of expansions 87, 88, respectively on the shell 81 and on the cover 84, allow the

- 7 -

cover 84 to be clamped on the shell 81 by the tension rods 89 provided with a head 90 at one end and with a thread at the other end on which a nut 91 is screwed. On the inner surface of the cover 84 is fastened a second air pump 95 by the studs 96 as well as the body 97 comprising the delivery and intake pipes 115, 116 (FIG. 7) by the studs 98. The shaft 99 of the rotor 100 of the air pump extends outside the cover 84, borne by the bearing 101 housed in the cover, and has at its outer end the gear wheel 102 which meshes the reduction gear wheel 103. The left end of the shaft 104 of the latter gear wheel is borne by the bearing 105 housed in the cover 84, whereas the righ extension of the shaft 104 is borne by the bearing 106 housed in the cover 107 secured to the cover 84 by the studs 108 and ends with the pinion 109 that works as power take-off to transmit the movement to the rotor 100.

The air pump 95 and the body 97 are dipped in a solution 110 of water with 20% of ethylene glycol.

The streams of air delivered and intaken by the air pump may pass, by means of a known switch 111 fastened to the cover 84 by bolts 120, along the ducts 113 and 114, respectively, or vice versa. If the air pump delivers to the outside an air stream along the pipe 115 of the body 97 (FIG. 7), by conveniently operating with the lever 112 of the switch a valve in the switch, such stream may be passed along the duct 113 or 114.

Between the flanges for fastening the air pump and the body 97 to the inner surface of the cover 84 are interposed

*Dott. Ing. Ruggero Ferraini*

suitable seals, not shown in the drawing.

The shell 81 is provided with an upper inlet and with a lower outlet, not shown in the drawing, which may be closed with water-tight caps and serve, respectively, for filling in and ejecting from the shell the solution 110. In the embodiment illustrated in the FIGG. 6 and 7 are not shown, in order not to complicate the drawing, a lubricating oil reservoir and relevant ducts for the connection with the delivery and intake pipes, such reservoir and pipes being provided in this embodiment too.

Dott. Ing. Ruggero Ferraiolo

Claims:

1. A method for cooling an air pump associated with a tank characterized in that an air pump (1 or 95) is water-tight held in a shell (3 or 81) in which the air pump is dipped in a cooling liquid (4 or 110) and the shell is quite totally incorporated in a tank (53 or 82) close to the tank bottom.

2. A method according to claim 1 characterized in that the volume of the cooling liquid (4 or 110) contained in the shell is such that it conveniently cools the air pump throughout a time period as specified in dependance of the external air temperature and of the level of the liquid (9) in the tank (53 or 82).

3. A method according to claim 1 characterized in that the cooling liquid (4 or 110) is circulated in a circuit, outside the shell (3 or 81) and the tank (53 or 82), comprising a heat exchanger.

4. A method according to the preceding claims characterized in that the air pump (1 or 95) is driven through a power take-off (10 or 99) water-tight extending outside the shell (3 or 81), that the air delivery and intake pipes (11, 12 - 11', 12' or 115, 116) of the air pump water-tight extend outside the shell (3 or 81), that a lubricating oil reservoir (15) is connected with the air delivery and intake pipes (11, 12 - 11', 12') by means of ducts (16, 17).

5. A system for associating an air pump with a tank

Dott. Ing. Ruggero Ferraiolo

characterized in that it comprises a shell (3) water-tight and quite totally incorporated in a tank (53); an air pump (1) held in the shell, radially secured by feet (18) and by adjustment rods (19); a cover (32), outside the tank, that water-tight closes the shell; means for the water-tight extension outside the shell of a power take-off (10) of the air pump and of air delivery and intake pipes (11, 12 - 11', 12') said means being suitable to axially fasten the air pump in the shell; an inlet (34), provided with a cap, for introducing a cooling liquid (4) in the space available between the air pump and the inner surface of the shell; an outlet (35), provided with a cap, for ejecting the cooling liquid from the shell.

6. A system according to claim 5 characterized in that it comprises outside the tank a heat exchanger and a circulation pump connected with the inner part of the shell (3) in order to circulate and cool the cooling liquid (4).

7. A system according to claims 5 and 6 characterized in that it comprises an elastic wall (60) through which the power take-off (10) extends outside the shell (3) and on which the air pump (1) is water-tight pressed; a discontinuous connection between inner parts (11, 12) and outer parts (11', 12') of the air delivery and intake pipes, this connection comprising a first ring (71) welded on the outer part (11', 12') of said pipes, comprising a pressing sloping surface (73) that presses an "O-ring" seal (74) on the inner part (11, 12) of said pipes and on a front surface of a second threaded ring (76) secured to the cover (32), the

Dott. Ing. Ruggero Ferraiolo

first ring (71) being pressed towards the second ring (76) by a ring nut (7) screwed on the second ring (76).

8. A system for associating an air pump with a tank characterized in that it comprises a shell (81) water-tight and quite totally incorporated in a tank (82); a first cover (84), outside the tank, that water-tight closes the shell; an air pump (95) held in the shell rigidly fixed to and supported by the first cover which is also an element closing the air pump end adjacent to the first cover as well as an element axially restraining the air pump rotor (100); an inlet provided with a cap allowing for the introduction of a cooling liquid (110) in the space available between the air pump and the inner surface of the shell; an outlet provided with a cap allowing for the ejection of the cooling liquid from the shell.

9. A system according to claim 8 characterized in that the first cover (84) comprises a seat for housing a bearing (101) which bears the outer end (99) of the rotor (100) and a seat for housing a bearing (105) which bears an end of the shaft (104) of the reduction gear wheel (103) provided with a pinion (109) for the power take-off.

10. A system according to claims 8 and 9 characterized in that the first cover (84) comprises apertures facing the delivery and intake pipes (115, 116) of the air operated by the air pump, said apertures being in communication with a switch provided with a lever (112) and fastened to the outer surface of the first cover, the switch being suitable to

Dott. Ing. Ruggero Ferraiolo

deviate the air in outer intake and delivery ducts (113, 114); the first cover comprises a peripheral groove (85) into which the outer edge of the shell (81) enters, a suitable seal (86) being interposed between said two elements; the first cover comprises, fastened to its outer surface, a second cover (107) which covers the mechanical coupling between the power take-off (109) and the shaft (99) of the rotor (100) and which houses a bearing (106) which bears the outer part of the shaft (104) of a reduction gear wheel (103); the first cover comprises a plurality of radial expansions (88) each engaging a tension rod (89) engaged in a radial expansion (87) of the shell (81) for closing the cover itself on the shell.

*Dott. Ing. Ruggero Ferraiolo*

**FIG. 2**

**FIG. 1**

**FIG. 7**

**FIG. 3**

Dott. Ing. Ruggero Ferraiolo

**FIG. 4**

**FIG. 5**

Dott. Ing. Ruggero Ferraiolo

0035664

# FIG. 6

Dott. Ing. Ruggero Ferraiolo

0035664

European Patent Office

**EUROPEAN SEARCH REPORT**

Application number

EP 81 10 1048

| Category | Citation of document with indication, where appropriate, of relevant passages | Relevant to claim |
|---|---|---|
| | FR - A - 2 209 897 (BRITISH OXYGEN)<br><br>* page 1, lines 32-36; page 2, lines 1-14; figure 1 * | 1,3,6 |
| | DE - A - 2 804 653 (OLOFSSON)<br><br>* page 6, paragraphs 1,3,5; figure* | 1,2,3 |
| A | GB - A - 249 749 (WITHERS)<br><br>* the whole document * | |
| A | DE - A - 2 443 815 (D.F.V.L.R.)<br><br>* the whole document * | |
| A | US - A - 4 061 273 (RICHARDSON)<br><br>* the whole document * | |

DOCUMENTS CONSIDERED TO BE RELEVANT

**CLASSIFICATION OF THE APPLICATION (Int. Cl.³)**

F 04 B 39/06
F 04 F 1/02
A 01 C 23/00

**TECHNICAL FIELDS SEARCHED (Int. Cl.³)**

F 04 B
F 04 F
A 01 C

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 19-06-1981 | HEINLEIN |

EPO Form 1503.1 06.78